# EUROPEAN PATENT APPLICATION

(11) **EP 4 492 908 A1**
(43) Date of publication of application: **15.01.2025**
(21) Application number: 24179197.9
(22) Date of filing: 31.05.2024
(51) Int. Cl.: H04W 76/14, H04W 72/0453, H04W 84/12

(54) **SYSTEMS AND METHODS OF FREQUENCY SHARING**

(30) Priority: 11.07.2023 US 202363526075 P; 29.02.2024 US 202418591941
(71) Applicant: Meta Platforms Technologies, LLC, Menlo Park, CA 94025 (US)
(72) Inventor: Aldana, Carlos Horacio, Menlo Park (US); Kerai, Kanji Mavji, Menlo Park (US)
(74) Representative: Murgitroyd & Company

(57) **Abstract**

Systems and methods for frequency sharing may include a first wireless personal area network (WPAN) device which establishes a connection with a second WPAN device. The connection may include a plurality of WPAN channels established in a frequency range which includes one or more channels reserved for wireless local area network (WLAN) communication. The first WPAN device may transmit data via one or more of the plurality of WPAN channels, to the second WPAN device.

## Description

### FIELD OF DISCLOSURE

The present disclosure is generally related to wireless communication between devices, in particular, to systems and methods of frequency sharing.

### BACKGROUND

The development of ultra-wideband devices has shown promise in determining accurate ranging between devices. However, in some instances, multiple devices, which may use or support different wireless communication protocols, may concurrently operate in a shared environment. In such instances, frequency interference can occur, depending on the frequency channels used for such wireless communications.

### SUMMARY

In one aspect, this disclosure is directed to a method. The method includes establishing, by a first wireless personal area network (WPAN) device, a connection with a second WPAN device. The connection includes a plurality of WPAN channels established in a frequency range which includes one or more channels allocated/configured/reserved for wireless local area network (WLAN) communication. The method includes transmitting, by the first WPAN device, data via one or more of the plurality of WPAN channels, to the second WPAN device.

In some embodiments, the first WPAN device and the second WPAN device may include at least one of ultra-wideband (UWB) devices, or a 2.4 gigahertz (GHz) device. In some embodiments, a first device includes the first WPAN device and a WLAN device, the connection includes a first connection, and the method further includes establishing, by the WLAN device, a second connection with a WLAN access point within the frequency range of the first connection. In some embodiments, the method includes performing, by the first WPAN device, an adaptive frequency hopping procedure, to hop between the plurality of WPAN channels of the connection.

In some embodiments, the connection includes a combined bandwidth or frequency width of at least 20 megahertz (MHz) across the plurality of WPAN channels. In some embodiments, the plurality of WPAN channels include at least five channels, including three advertising channels and two data channels. In some embodiments, the frequency range includes at least one of between 5,150 megahertz (MHz) and 5,250 MHz, between 5,725 MHz and 5,850 MHz, between 5,850 MHz and 5,925 MHz, or between 5,925 MHz and 6,425 MHz. In some embodiments, the frequency range includes a frequency range between 5,925 MHz and 6,425 MHz, and the plurality of WPAN channels include channels between 5,925 MHz and 5,945 MHz.

In some embodiments, the method includes generating, by the first WPAN device, a packet to indicate the plurality of WPAN channels of the connection are to be established. The method may include transmitting, by the first WPAN device, the packet for receipt by at least one of the second WPAN device or a WLAN device. In some embodiments, the packet includes at least one of a traffic indication packet or a beacon packet. In some embodiments, the packet includes a bitmap, where each bit of the bitmap corresponds to a respective channel between 5,150 megahertz (MHz) and 6,425 MHz.

In another aspect, this disclosure is directed to a first device including a wireless personal area network (WPAN) transceiver, and one or more processors configured to establish, via the WPAN transceiver, a connection with a second device. The connection includes a plurality of WPAN channels established in a frequency range which includes one or more channels reserved (e.g., allocated, configured) for wireless local area network (WLAN) communication. The one or more processors are configured to transmit, via the first WPAN transceiver, data via one or more of the plurality of WPAN channels, to the second device.

In some embodiments, the first WPAN device and the second WPAN device include at least one of ultra-wideband (UWB) devices, or a 2.4 gigahertz (GHz) device (e.g., a device operating/communicating at 2.4 GHz). In some embodiments, the first device includes a WLAN transceiver, the connection includes a first connection, and the one or more processors are configured to establish, via the WLAN transceiver, a second connection with a WLAN access point within the frequency range of the first connection.

In some embodiments, the connection includes a combined bandwidth or frequency width of at least 20 megahertz (MHz) across the plurality of WPAN channels. In some embodiments, the plurality of WPAN channels include at least five channels, including three advertising channels and two data channels. In some embodiments, the frequency range includes at least one of between 5,150 megahertz (MHz) and 5,250 MHz, between 5,725 MHz and 5,850 MHz, between 5,850 MHz and 5,925 MHz, or between 5,925 MHz and 6,425 MHz. In some embodiments, the frequency range includes a frequency range between 5,925 MHz and 6,425 MHz, and the plurality of WPAN channels include channels between 5,925 MHz and 5,945 MHz.

In some embodiments, the one or more processors are configured to generate a packet to indicate the plurality of WPAN channels of the connection are to be established, and transmit, via the WPAN transceiver, the packet for receipt by at least one of the second WPAN device or a WLAN device. In some embodiments, the packet includes at least one of a traffic indication packet or a beacon packet for a WLAN device, and the packet includes a bitmap, where each bit of the bitmap corresponds to a respective channel between 5,150 megahertz (MHz) and 6,425 MHz.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of a system environment including an artificial reality system, according to an example implementation of the present disclosure.
FIG. 2 is a diagram of a head wearable display, according to an example implementation of the present disclosure.
FIG. 3 is a block diagram of an artificial reality environment, according to an example implementation of the present disclosure.
FIG. 4 is a block diagram of another artificial reality environment, according to an example implementation of the present disclosure.
FIG. 5 is a block diagram of another artificial reality environment, according to an example implementation of the present disclosure.
FIG. 6 is a block diagram of a computing environment, according to an example implementation of the present disclosure.
FIG. 7 is a block diagram of a system for frequency sharing, according to an example implementation of the present disclosure.
FIG. 8 is a diagram showing channels allocated for 5 gigahertz (GHz) communication, according to an example implementation of the present disclosure.
FIG. 9 is another diagram showing channels allocated for 5 GHz communication, according to an example implementation of the present disclosure.
FIG. 10 is a flowchart showing an example method for frequency sharing, according to an example implementation of the present disclosure.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

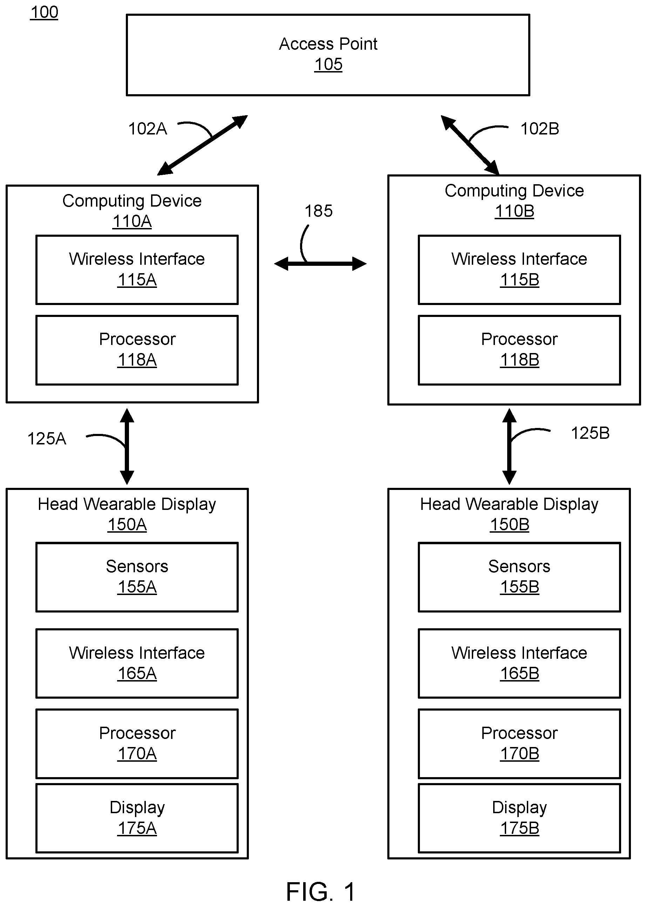

FIG. 1 is a block diagram of an example artificial reality system environment 100. In some embodiments, the artificial reality system environment 100 includes an access point (AP) 105, one or more HWDs 150 (e.g., HWD 150A, 150B), and one or more computing devices 110 (computing devices 110A, 110B; sometimes referred to as stage devices or consoles) providing data for artificial reality to the one or more HWDs 150. The access point 105 may be a router or any network device allowing one or more computing devices 110 and/or one or more HWDs 150 to access a network (e.g., the Internet). The access point 105 may be replaced by any communication device (cell site). A computing device 110 may be a custom device or a mobile device that can retrieve content from the access point 105, and provide image data of artificial reality to a corresponding HWD 150. Each HWD 150 may present the image of the artificial reality to a user according to the image data. In some embodiments, the artificial reality system environment 100 includes more, fewer, or different components than shown in FIG. 1. In some embodiments, the computing devices 110A, 110B communicate with the access point 105 through wireless links 102A, 102B (e.g., interlinks), respectively. In some embodiments, the computing device 110A communicates with the HWD 150A through a wireless link 125A (e.g., intralink), and the computing device 110B communicates with the HWD 150B through a wireless link 125B (e.g., intralink). In some embodiments, functionality of one or more components of the artificial reality system environment 100 can be distributed among the components in a different manner than is described here. For example, some of the functionality of the computing device 110 may be performed by the HWD 150. For example, some of the functionality of the HWD 150 may be performed by the computing device 110.

In some embodiments, the HWD 150 is an electronic component that can be worn by a user and can present or provide an artificial reality experience to the user. The HWD 150 may be referred to as, include, or be part of a head mounted display (HMD), head mounted device (HMD), head wearable device (HWD), head worn display (HWD) or head worn device (HWD). The HWD 150 may render one or more images, video, audio, or some combination thereof to provide the artificial reality experience to the user. In some embodiments, audio is presented via an external device (e.g., speakers and/or headphones) that receives audio information from the HWD 150, the computing device 110, or both, and presents audio based on the audio information. In some embodiments, the HWD 150 includes sensors 155, a wireless interface 165, a processor 170, and a display 175. These components may operate together to detect a location of the HWD 150 and a gaze direction of the user wearing the HWD 150, and render an image of a view within the artificial reality corresponding to the detected location and/or orientation of the HWD 150. In other embodiments, the HWD 150 includes more, fewer, or different components than shown in FIG. 1.

In some embodiments, the sensors 155 include electronic components or a combination of electronic components and software components that detects a location and an orientation of the HWD 150. Examples of the sensors 155 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 155 detect the translational movement and the rotational movement, and determine an orientation and location of the HWD 150. In one aspect, the sensors 155 can detect the translational movement and the rotational movement with respect to a previous orientation and location of the HWD 150, and determine a new orientation and/or location of the HWD 150 by accumulating or integrating the detected translational movement and/or the rotational movement. Assuming for an example that the HWD 150 is oriented in a direction 25 degrees from a reference direction, in response to detecting that the HWD 150 has rotated 20 degrees, the sensors 155 may determine that the HWD 150 now faces or is oriented in a direction 45 degrees from the reference direction. Assuming for another example that the HWD 150 was located two feet away from a reference point in a first direction, in response to detecting that the HWD 150 has moved three feet in a second direction, the sensors 155 may determine that the HWD 150 is now located at a vector multiplication of the two feet in the first direction and the three feet in the second direction.

In some embodiments, the wireless interface 165 includes an electronic component or a combination of an electronic component and a software component that communicates with the computing device 110. In some embodiments, the wireless interface 165 includes or is embodied as a transceiver for transmitting and receiving data through a wireless medium. The wireless interface 165 may communicate with a wireless interface 115 of a corresponding computing device 110 through a wireless link 125 (e.g., intralink). The wireless interface 165 may also communicate with the access point 105 through a wireless link (e.g., interlink). Examples of the wireless link 125 include a near field communication link, Wi-Fi direct, Bluetooth, or any wireless communication link. In some embodiments, the wireless link 125 may include one or more ultra-wideband communication links, as described in greater detail below. Through the wireless link 125, the wireless interface 165 may transmit to the computing device 110 data indicating the determined location and/or orientation of the HWD 150, the determined gaze direction of the user, and/or hand tracking measurement. Moreover, through the wireless link 125, the wireless interface 165 may receive from the computing device 110 image data indicating or corresponding to an image to be rendered.

In some embodiments, the processor 170 includes an electronic component or a combination of an electronic component and a software component that generates one or more images for display, for example, according to a change in view of the space of the artificial reality. In some embodiments, the processor 170 is implemented as one or more graphical processing units (GPUs), one or more central processing unit (CPUs), or a combination of them that can execute instructions to perform various functions described herein. The processor 170 may receive, through the wireless interface 165, image data describing an image of artificial reality to be rendered, and render the image through the display 175. In some embodiments, the image data from the computing device 110 may be encoded, and the processor 170 may decode the image data to render the image. In some embodiments, the processor 170 receives, from the computing device 110 through the wireless interface 165, object information indicating virtual objects in the artificial reality space and depth information indicating depth (or distances from the HWD 150) of the virtual objects. In one aspect, according to the image of the artificial reality, object information, depth information from the computing device 110, and/or updated sensor measurements from the sensors 155, the processor 170 may perform shading, reprojection, and/or blending to update the image of the artificial reality to correspond to the updated location and/or orientation of the HWD 150.

In some embodiments, the display 175 is an electronic component that displays an image. The display 175 may, for example, be a liquid crystal display or an organic light emitting diode display. The display 175 may be a transparent display that allows the user to see through. In some embodiments, when the HWD 150 is worn by a user, the display 175 is located proximate (e.g., less than 3 inches) to the user's eyes. In one aspect, the display 175 emits or projects light towards the user's eyes according to image generated by the processor 170. The HWD 150 may include a lens that allows the user to see the display 175 in a close proximity.

In some embodiments, the processor 170 performs compensation to compensate for any distortions or aberrations. In one aspect, the lens introduces optical aberrations such as a chromatic aberration, a pin-cushion distortion, barrel distortion, etc. The processor 170 may determine a compensation (e.g., predistortion) to apply to the image to be rendered to compensate for the distortions caused by the lens, and apply the determined compensation to the image from the processor 170. The processor 170 may provide the predistorted image to the display 175.

In some embodiments, the computing device 110 is an electronic component or a combination of an electronic component and a software component that provides content to be rendered to the HWD 150. The computing device 110 may be embodied as a mobile device (e.g., smart phone, tablet PC, laptop, etc.). The computing device 110 may operate as a soft access point. In one aspect, the computing device 110 includes a wireless interface 115 and a processor 118. These components may operate together to determine a view (e.g., a FOV of the user) of the artificial reality corresponding to the location of the HWD 150 and the gaze direction of the user of the HWD 150, and can generate image data indicating an image of the artificial reality corresponding to the determined view. The computing device 110 may also communicate with the access point 105, and may obtain AR/VR content from the access point 105, for example, through the wireless link 102 (e.g., interlink). The computing device 110 may receive sensor measurement indicating location and the gaze direction of the user of the HWD 150 and provide the image data to the HWD 150 for presentation of the artificial reality, for example, through the wireless link 125 (e.g., intralink). In other embodiments, the computing device 110 includes more, fewer, or different components than shown in FIG. 1.

In some embodiments, the wireless interface 115 is an electronic component or a combination of an electronic component and a software component that communicates with the HWD 150, the access point 105, other computing device 110, or any combination of them. In some embodiments, the wireless interface 115 includes or is embodied as a transceiver for transmitting and receiving data through a wireless medium. The wireless interface 115 may be a counterpart component to the wireless interface 165 to communicate with the HWD 150 through a wireless link 125 (e.g., intralink). The wireless interface 115 may also include a component to communicate with the access point 105 through a wireless link 102 (e.g., interlink). Examples of wireless link 102 include a cellular communication link, a near field communication link, Wi-Fi, Bluetooth, 60 GHz wireless link, ultra-wideband link, or any wireless communication link. The wireless interface 115 may also include a component to communicate with a different computing device 110 through a wireless link 185. Examples of the wireless link 185 include a near field communication link, Wi-Fi direct, Bluetooth, ultra-wideband link, or any wireless communication link. Through the wireless link 102 (e.g., interlink), the wireless interface 115 may obtain AR/VR content, or other content from the access point 105. Through the wireless link 125 (e.g., intralink), the wireless interface 115 may receive from the HWD 150 data indicating the determined location and/or orientation of the HWD 150, the determined gaze direction of the user, and/or the hand tracking measurement. Moreover, through the wireless link 125 (e.g., intralink), the wireless interface 115 may transmit to the HWD 150 image data describing an image to be rendered. Through the wireless link 185, the wireless interface 115 may receive or transmit information indicating the wireless link 125 (e.g., channel, timing) between the computing device 110 and the HWD 150. According to the information indicating the wireless link 125, computing devices 110 may coordinate or schedule operations to avoid interference or collisions.

The processor 118 can include or correspond to a component that generates content to be rendered according to the location and/or orientation of the HWD 150. In some embodiments, the processor 118 includes or is embodied as one or more central processing units, graphics processing units, image processors, or any processors for generating images of the artificial reality. In some embodiments, the processor 118 may incorporate the gaze direction of the user of the HWD 150 and a user interaction in the artificial reality to generate the content to be rendered. In one aspect, the processor 118 determines a view of the artificial reality according to the location and/or orientation of the HWD 150. For example, the processor 118 maps the location of the HWD 150 in a physical space to a location within an artificial reality space, and determines a view of the artificial reality space along a direction corresponding to the mapped orientation from the mapped location in the artificial reality space. The processor 118 may generate image data describing an image of the determined view of the artificial reality space, and transmit the image data to the HWD 150 through the wireless interface 115. The processor 118 may encode the image data describing the image, and can transmit the encoded data to the HWD 150. In some embodiments, the processor 118 generates and provides the image data to the HWD 150 periodically (e.g., every 11 ms or 16 ms).

In some embodiments, the processors 118, 170 may configure or cause the wireless interfaces 115, 165 to toggle, transition, cycle or switch between a sleep mode and a wake up mode. In the wake up mode, the processor 118 may enable the wireless interface 115 and the processor 170 may enable the wireless interface 165, such that the wireless interfaces 115, 165 may exchange data. In the sleep mode, the processor 118 may disable (e.g., implement low power operation in) the wireless interface 115 and the processor 170 may disable the wireless interface 165, such that the wireless interfaces 115, 165 may not consume power or may reduce power consumption. The processors 118, 170 may schedule the wireless interfaces 115, 165 to switch between the sleep mode and the wake up mode periodically every frame time (e.g., 11 ms or 16 ms). For example, the wireless interfaces 115, 165 may operate in the wake up mode for 2 ms of the frame time, and the wireless interfaces 115, 165 may operate in the sleep mode for the remainder (e.g., 9 ms) of the frame time. By disabling the wireless interfaces 115, 165 in the sleep mode, power consumption of the computing device 110 and the HWD 150 can be reduced.

Disclosed herein are embodiments related to devices operating in the ultra-wideband (UWB) spectrum. In various embodiments, UWB devices may operate in the 3-10 GHz unlicensed spectrum, for example, and may use 500+ MHz channels. These channels may require low power for transmission. For example, the transmit power spectral density (PSD) for some devices may be limited to -41.3 dBm/MHz. On the other hand, UWB may have transmit PSD values in the range of -5 to +5 dBm/MHz range, averaged over 1 ms, with a peak power limit of 0 dBm in a given 50 MHz band. Using simple modulation and spread spectrum, UWB devices may achieve reasonable resistance to Wi-Fi and Bluetooth interference (as well as resistance to interference with other UWB devices within a shared or common environment) for very low data rates (e.g., 10s to 100s Kbps) and may have large processing gains. However, for higher data rates (e.g., several Mbps), the processing gains may not be sufficient to overcome co-channel interference from Wi-Fi or Bluetooth. According to the embodiments described herein, the systems and methods described herein may operate in frequency bands that do not overlap with Wi-Fi and Bluetooth, but may have good global availability based on regulatory requirements. Since regulatory requirements make the 7-8 GHz spectrum the most widely available globally (and Wi-Fi is not present in this spectrum), the 7-8 GHz spectrum may operate satisfactory both based on co-channel interference and processing gains.

Some implementations of UWB may focus on precision ranging, security, and low to moderate rate data communication. As UWB employs relatively simple modulation, it may be implemented at low cost and low power consumption. In AR/VR applications, link budget calculations for an AR/VR controller link indicate that the systems and methods described herein may be configured for effective data throughput ranging from ~2 to 31 Mbps (e.g., with 31 Mbps being the maximum rate), which may depend on body loss assumptions. Using conservative body loss assumptions, the systems and methods described herein should be configured for data throughput of up to approximately 5 Mbps, which may be sufficient to meet the data throughput performance standards for AR/VR links. With a customized implementation, data throughput rate could be increased beyond 27 Mbps (e.g., to 54 Mbps), but with possible loss in link margin.

In various embodiments, the devices in the environments described above may operate or otherwise use components which leverage communications in the ultra-wideband (UWB) spectrum. In various embodiments, UWB devices operate in the 3-10 GHz unlicensed spectrum using 500+ MHz channels which may require low power for transmission. For example, the transmit power spectral density (PSD) for some systems may be limited to -41.3 dBm/MHz. On the other hand, UWB may have transmit PSD values in the range of -5 to +5 dBm/MHz range, averaged over 1 ms, with a peak power limit of 0 dBm in a given 50 MHz band. Using simple modulation and spread spectrum, UWB devices may achieve reasonable resistance to Wi-Fi and Bluetooth interference (as well as resistance to interference with other UWB devices located in the environment) for very low data rates (e.g., 10s to 100s Kbps) and may have large processing gains. However, for higher data rates (e.g., several Mbps), the processing gains may not be sufficient to overcome co-channel interference from Wi-Fi or Bluetooth. According to the embodiments described herein, the systems and methods described herein may operate in frequency bands that do not overlap with Wi-Fi and Bluetooth, but may have good global availability based on regulatory requirements. Since regulatory requirements make the 7-8 GHz spectrum the most widely available globally (and Wi-Fi is not present in this spectrum), the 7-8 GHz spectrum may operate satisfactory both based on co-channel interference and processing gains.

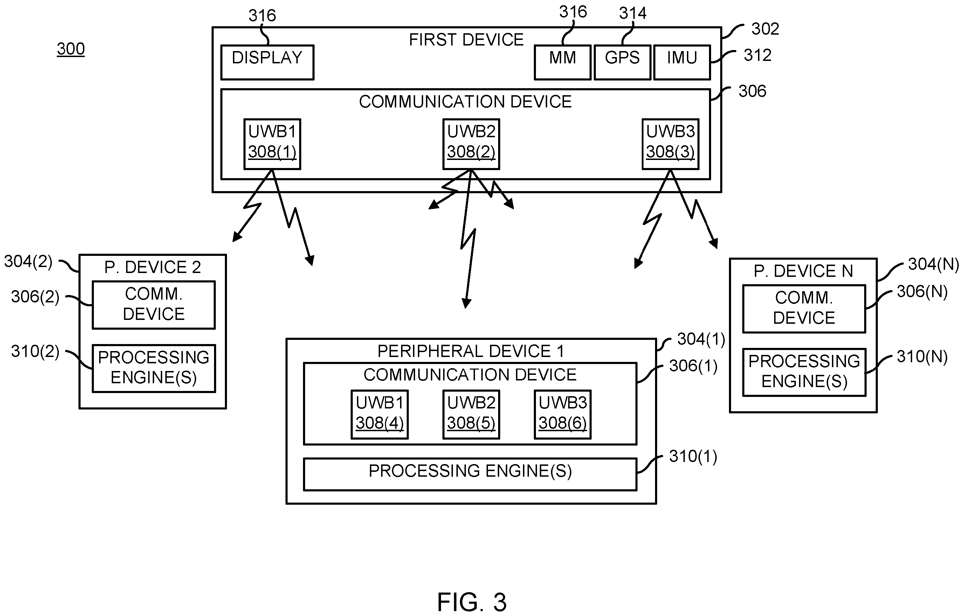

Some implementations of UWB may focus on precision ranging, security, and for low-to-moderate rate data communication. As UWB employs relatively simple modulation, it may be implemented at low cost and low power consumption. In AR/VR applications (or in other applications and use cases), link budget calculations for an AR/VR controller link indicate that the systems and methods described herein may be configured for effective data throughput ranging from ~2 to 31 Mbps (e.g., with 31 Mbps being the maximum possible rate in the latest 802.15.4z standard), which may depend on body loss assumptions Referring now to FIG. 3, depicted is a block diagram of an artificial reality environment 300. The artificial reality environment 300 is shown to include a first device 302 and one or more peripheral devices 304(1) - 304(N) (also referred to as "peripheral device 304" or "device 304"). The first device 302 and peripheral device(s) 304 may each include a communication device 306 including a plurality of UWB devices 308. A set of UWB devices 308 may be spatially positioned/located (e.g., spaced out) relative to each other on different locations on/in the first device 302 or the peripheral device 304, so as to maximize UWB coverage and/or to enhance/enable specific functionalities. The UWB devices 308 may be or include antennas, sensors, or other devices and components designed or implemented to transmit and receive data or signals in the UWB spectrum (e.g., between 3.1 GHz and 10.6 GHz) and/or using UWB communication protocol. In some embodiments, one or more of the devices 302, 304 may include various processing engines 310. The processing engines 310 may be or include any device, component, machine, or other combination of hardware and software designed or implemented to control the devices 302, 304 based on UWB signals transmitted and/or received by the respective UWB devices 308.

As noted above, the environment 300 may include a first device 302. The first device 302 may be or include a wearable device, such as the HWD 150 described above, a smart watch, AR glasses, or the like. In some embodiments, the first device 302 may include a mobile device (e.g., a smart phone, tablet, stage/console device, or other computing device). The first device 302 may be communicably coupled with various other devices 304 located in the environment 300. For example, the first device 302 may be communicably coupled to one or more of the peripheral devices 304 located in the environment 300. The peripheral devices 304 may be or include the computing device 110 described above, a device similar to the first device 302 (e.g., a HWD 150, a smart watch, mobile device, etc.), an automobile or other vehicle, a beacon transmitting device located in the environment 300, a smart home device (e.g., a smart television, a digital assistant device, a smart speaker, etc.), a smart tag configured for positioning on various devices, etc. In some embodiments, the first device 302 may be associated with a first entity or user and the peripheral devices 304 may be associated with a second entity or user (e.g., a separate member of a household, or a person / entity unrelated to the first entity).

In some embodiments, the first device 302 may be communicably coupled with the peripheral device(s) 304 following a pairing or handshaking process. For example, the first device 302 may be configured to exchange handshake packet(s) with the peripheral device(s) 304, to pair (e.g., establish a specific or dedicated connection or link between) the first device 302 and the peripheral device 304. The handshake packet(s) may be exchanged via the UWB devices 308, or via another wireless link 125 (such as one or more of the wireless links 125 described above). Following pairing, the first device 302 and peripheral device(s) 304 may be configured to transmit, receive, or otherwise exchange UWB data or UWB signals using the respective UWB devices 308 on the first device 302 and/or peripheral device 304. In some embodiments, the first device 302 may be configured to establish a communications link with a peripheral device 304 (e.g., without any device pairing). For example, the first device 302 may be configured to detect, monitor, and/or identify peripheral devices 304 located in the environment using UWB signals received from the peripheral devices 304 within a certain distance of the first device 302, by identifying peripheral devices 304 which are connected to a shared Wi-Fi network (e.g., the same Wi-Fi network to which the first device 302 is connected), etc. In these and other embodiments, the first device 302 may be configured to transmit, send, receive, or otherwise exchange UWB data or signals with the peripheral device 304.

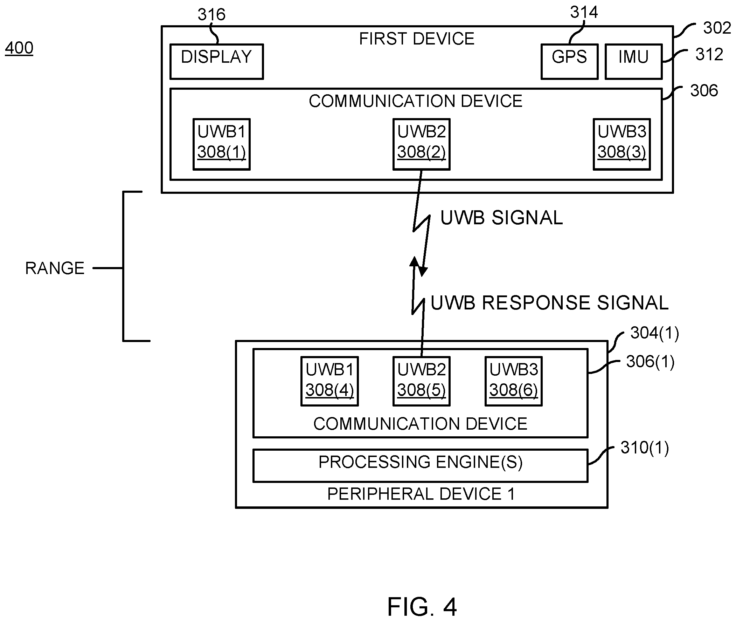

Referring now to FIG. 4, depicted is a block diagram of an environment 400 including the first device 302 and a peripheral device 304. The first device 302 and/or the peripheral device 304 may be configured to determine a range (e.g., a spatial distance, separation) between the devices 302, 304. The first device 302 may be configured to send, broadcast, or otherwise transmit a UWB signal (e.g., a challenge signal). The first device 302 may transmit the UWB signal using one of the UWB devices 308 of the communication device 306 on the first device 302. The UWB device 308 may transmit the UWB signal in the UWB spectrum. The UWB signal may have a high bandwidth (e.g., 500 MHz). As such, the UWB device 308 may be configured to transmit the UWB signal in the UWB spectrum (e.g., between 3.1 GHz and 10.6 GHz) and having a high bandwidth (e.g., 500 MHz). The UWB signal from the first device 302 may be detectable by other devices within a certain range of the first device 302 (e.g., devices having a line of sight (LOS) within 200m of the first device 302). As such, the UWB signal may be more accurate for detecting range between devices than other types of signals or ranging technology.

The peripheral device 304 may be configured to receive or otherwise detect the UWB signal from the first device 302. The peripheral device 304 may be configured to receive the UWB signal from the first device 302 via one of the UWB devices 308 on the peripheral device 304. The peripheral device 304 may be configured to broadcast, send, or otherwise transmit a UWB response signal responsive to detecting the UWB signal from the first device 302. The peripheral device 304 may be configured to transmit the UWB response signal using one of the UWB devices 308 of the communication device 306 on the peripheral device 304. The UWB response signal may be similar to the UWB signal sent from the first device 302.

The first device 302 may be configured to detect, compute, calculate, or otherwise determine a time of flight (TOF) based on the UWB signal and the UWB response signal. The TOF may be a time or duration between a time in which a signal (e.g., the UWB signal) is transmitted by the first device 302 and a time in which the signal is received by the peripheral device 304. The first device 302 and/or the peripheral device 304 may be configured to determine the TOF based on timestamps corresponding to the UWB signal. For example, the first device 302 and/or peripheral device 304 may be configured to exchange transmit and receive timestamps based on when the first device 302 transmits the UWB signal (a first TX timestamp), when the peripheral device receives the UWB signal (e.g., a first RX timestamp), when the peripheral device sends the UWB response signal (e.g., a second TX timestamp), and when the first device 302 receives the UWB response signal (e.g., a second RX timestamp). The first device 302 and/or the peripheral device 304 may be configured to determine the TOF based on a first time in which the first device 302 sent the UWB signal and a second time in which the first device 302 received the UWB response signal (e.g., from the peripheral device 304), as indicated by first and second TX and RX timestamps identified above. The first device 302 may be configured to determine or calculate the TOF between the first device 302 and the peripheral device 304 based on a difference between the first time and the second time (e.g., divided by two).

In some embodiments, the first device 302 may be configured to determine the range (or distance) between the first device 302 and the peripheral device 304 based on the TOF. For example, the first device 302 may be configured to compute the range or distance between the first device 302 and the peripheral device 304 by multiplying the TOF and the speed of light (e.g., TOF × c). In some embodiments, the peripheral device 304 (or another device in the environment 400) may be configured to compute the range or distance between the first device 302 and peripheral device 304. For example, the first device 302 may be configured to transmit, send, or otherwise provide the TOF to the peripheral device 304 (or other device), and the peripheral device 304 (or other device) may be configured to compute the range between the first device 302 and peripheral device 304 based on the TOF, as described above.

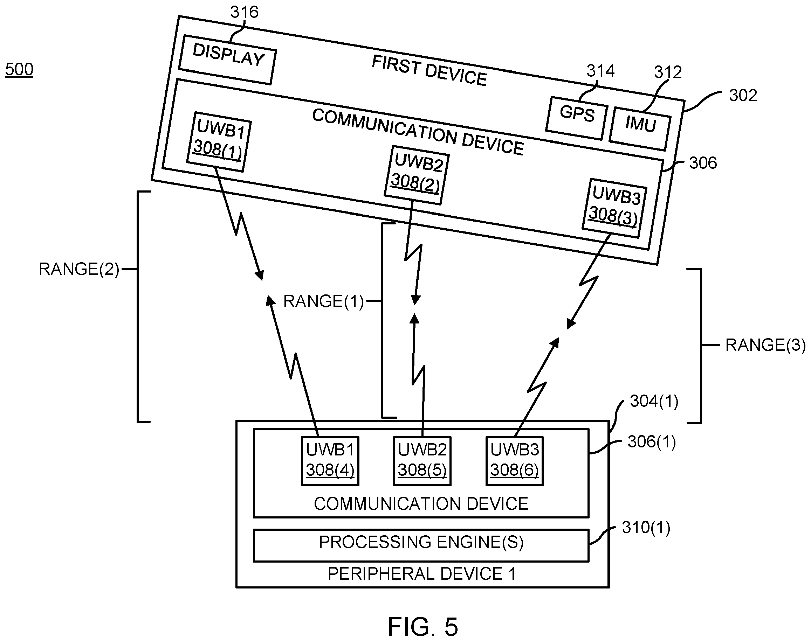

Referring now to FIG. 5, depicted is a block diagram of an environment 500 including the first device 302 and a peripheral device 304. In some embodiments, the first device 302 and/or the peripheral device 304 may be configured to determine a position or pose (e.g., orientation) of the first device 302 relative to the peripheral device 304. The first device 302 and/or the peripheral device 304 may be configured to determine the relative position or orientation in a manner similar to determining the range as described above. For example, the first device 302 and/or the peripheral device 304 may be configured to determine a plurality of ranges (e.g., range(1), range(2), and range(3)) between the respective UWB devices 308 of the first device 302 and the peripheral device 304. In the environment 500 of FIG. 5, the first device 302 is positioned or oriented at an angle relative to the peripheral device 304. The first device 302 may be configured to compute the first range (range(1)) between central UWB devices 308(2), 308(5) of the first and peripheral device 304. The first range may be an absolute range or distance between the devices 302, 304, and may be computed as described above with respect to FIG. 4.

The first device 302 and/or the peripheral device 304 may be configured to compute the second range(2) and third range(3) similar to computing the range(1), In some embodiments, the first device 302 and/or the peripheral device 304 may be configured to determine additional ranges, such as a range between UWB device 308(1) of the first device 302 and UWB device 308(5) of the peripheral device 304, a range between UWB device 308(2) of the first device 302 and UWB device 308(6) of the peripheral device 304, and so forth. While described above as determining a range based on additional UWB signals, it is noted that, in some embodiments, the first device 302 and/or the peripheral device 304 may be configured to determine a phase difference between a UWB signal received at a first UWB device 308 and a second UWB device 308 (i.e., the same UWB signal received at separate UWB devices 308 on the same device 302, 304). The first device 302 and/or the peripheral device 304 may be configured to use each or a subset of the computed ranges (or phase differences) to determine the pose, position, orientation, etc. of the first device 302 relative to the peripheral device 304. For example, the first device and/or the peripheral device 304 may be configured to use one of the ranges relative to the first range(1) (or phase differences) to determine a yaw of the first device 302 relative to the peripheral device 304, another one of the ranges relative to the first range(1) (or phase differences) to determine a pitch of the first device 302 relative to the peripheral device 304, another one of the ranges relative to the first range(1) (or phase differences) to determine a roll of the first device 302 relative to the peripheral device 304, and so forth.

By using the UWB devices 308 at the first device 302 and peripheral devices 304, the range and pose may be determined with greater accuracy than other ranging / wireless link technologies. For example, the range may be determined within a granularity or range of +/- 0.1 meters, and the pose/orientation may be determined within a granularity or range of +/- 5 degrees.

Referring to FIG. 3 - FIG. 5, in some embodiments, the first device 302 may include various sensors and/or sensing systems. For example, the first device 302 may include an inertial measurement unit (IMU) sensor 312, global positioning system (GPS) 314, etc. The sensors and/or sensing systems, such as the IMU sensor 312 and/or GPS 314 may be configured to generate data corresponding to the first device 302. For example, the IMU sensor 312 may be configured to generate data corresponding to an absolute position and/or pose of the first device 302. Similarly, the GPS 314 may be configured to generate data corresponding to an absolute location/position of the first device 302. The data from the IMU sensor 312 and/or GPS 314 may be used in conjunction with the ranging / position data determined via the UWB devices 308 as described above. In some embodiments, the first device 302 may include a display 316. The display 316 may be integrated or otherwise incorporated in the first device 302. In some embodiments, the display 316 may be separate or remote from the first device 302. The display 316 may be configured to display, render, or otherwise provide visual information to a user or wearer of the first device 302, which may be rendered at least in part on the ranging / position data of the first device 302.

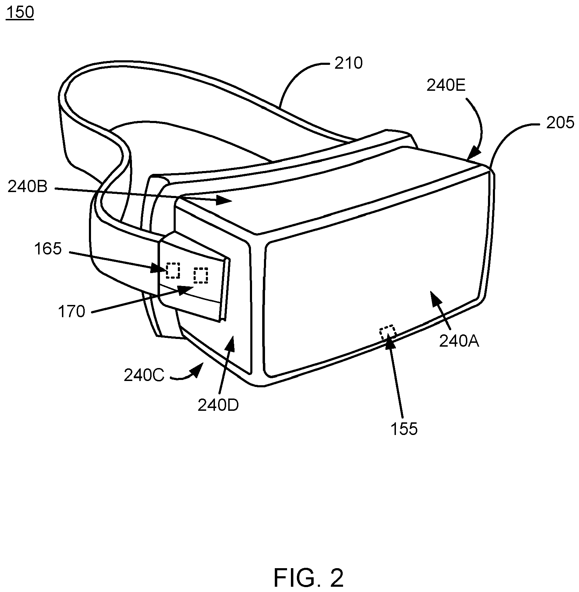

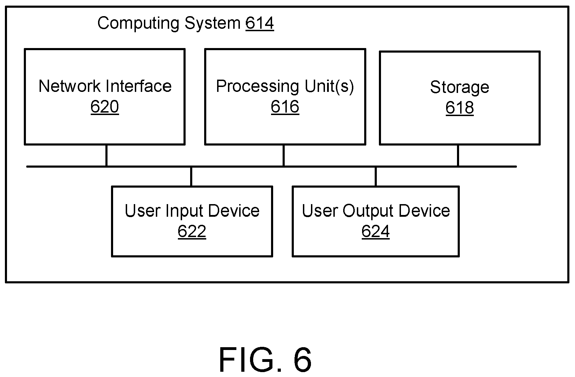

Various operations described herein can be implemented on computer systems. FIG. 6 shows a block diagram of a representative computing system 614 usable to implement the present disclosure. In some embodiments, the computing device 110, the HWD 150, devices 302, 304, or each of the components of FIG. 1-5 are implemented by or may otherwise include one or more components of the computing system 614. Computing system 614 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 614 can be implemented to provide VR, AR, MR experience. In some embodiments, the computing system 614 can include conventional computer components such as processors 616, storage device 618, network interface 620, user input device 622, and user output device 624.

Network interface 620 can provide a connection to a wide area network (e.g., the Internet) to which WAN interface of a remote server system is also connected. Network interface 620 can include a wired interface (e.g., Ethernet) and/or a wireless interface implementing various RF data communication standards such as Wi-Fi, Bluetooth, UWB, or cellular data network standards (e.g., 3G, 4G, 5G, 60 GHz, LTE, etc.).

User input device 622 can include any device (or devices) via which a user can provide signals to computing system 614; computing system 614 can interpret the signals as indicative of particular user requests or information. User input device 622 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 624 can include any device via which computing system 614 can provide information to a user. For example, user output device 624 can include a display to display images generated by or delivered to computing system 614. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 624 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 616 can provide various functionality for computing system 614, including any of the functionality described herein as being performed by a server or client, or other functionality associated with message management services.

It will be appreciated that computing system 614 is illustrative and that variations and modifications are possible. Computer systems used in connection with the present disclosure can have other capabilities not specifically described here. Further, while computing system 614 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

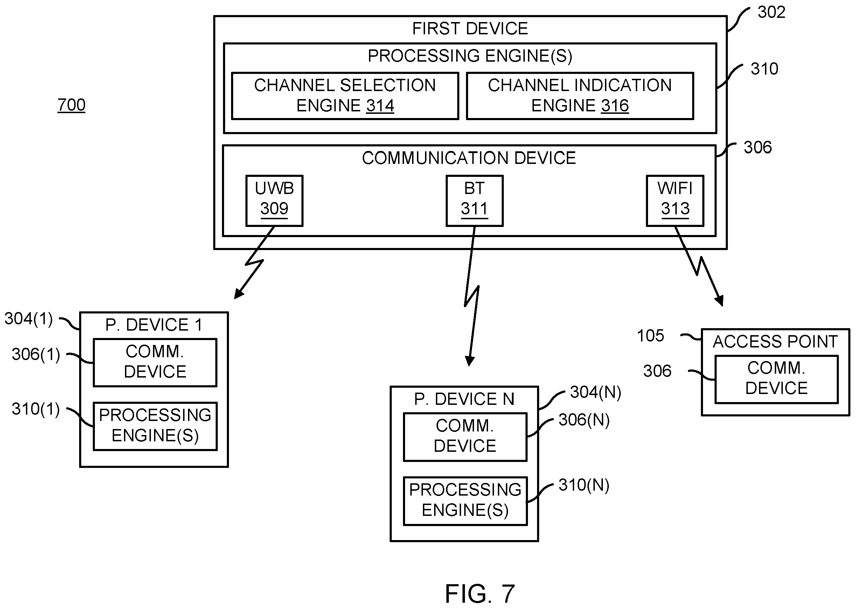

Referring generally to FIG. 7 through FIG. 10, this disclosure is directed to systems and methods of frequency sharing. More particularly, narrowband (NB) channels may be defined in various frequency bands (such as UNII-1, UNII-3, UNII-4, UNII-5, etc.), in which devices of a wireless local area network (WLAN), such as WI-FI, and devices of a wireless personal area network (WPAN), such as BLUETOOTH (BT), and UWB (generally referred to as narrowband or NB devices) can cooperate. BT is a frequency hopping mechanism that uses various frequencies. For example, in 2.4GHz BT low energy (BLE), the maximum number of 2 MHz channels may be 40, and a device may use 80 MHz. A device (such as a BT device) may use adaptive frequency hopping that eliminates some channels due to high interference. In such implementations, the 40 available channels may be reduced to 20 (or even less, such as five channels). Using lower than 40 channels may be normal, but may reduce the operations of multiple BT devices within range of one another. Another NB technology being defined in various UWB standards may use 2.5 MHz channel bandwidth and may also use or implement frequency hopping.

According to the systems and methods described herein, various devices may use NB in higher frequency bands, but reduce the number of channels, so as to provide minimal overlap between such NB technologies and WLAN protocols operating in substantially the same frequency bands.

Referring specifically to FIG. 7, depicted is a block diagram of a system 700 for frequency sharing, according to an example implementation of the present disclosure. The system 700 may include a first device 302, one or more peripheral devices 304, and an access point 105. The first device 302 may be similar to the first device 302, and the peripheral device(s) 304 may be similar to the peripheral device(s) 304, both described above with reference to FIG. 1 through FIG. 6. The access point 105 may be similar to the access point 105 described above with reference to FIG. 1. The first device 302 may include a communication device 306 including or supporting various wireless communication technology, including for instance WPAN communication via one or more WPAN antennas, devices, or transceivers (e.g., UWB transceiver 309 (which may be similar to the UWB devices 308 described above) and/or 2.4 GHz transceiver, such as a BT transceiver 311) and/or WLAN communication via one or more WLAN antennas or transceivers (e.g., WI-FI transceiver 313). As described in greater detail below, the first device 302 may be configured to establish (e.g., via the WPAN transceivers) a connection with a second WPAN device (e.g., a communication device 306 of a corresponding peripheral device 304). The connection may include a plurality of WPAN channels established in a frequency range which includes one or more channels reserved for WLAN communication between WLAN devices. The first device 302 may be configured to communicate data via one or more of the plurality of WPAN channels, to the second WPAN device.

The first device 302, peripheral device(s) 304, and access point 105 may include respective communication devices 306. The communication devices 306 may be or include any device, component, element, or hardware designed or configured to facilitate communication over a medium. For instance, the communication devices 306 may include transceivers including various antenna(s) configured to communicate over a wireless medium. As shown in FIG. 7, the communication device 306 of the first device 302 may include a plurality of transceivers for communicating according to a plurality of wireless communication protocols. For example, the communication device 306 may include one or more WPAN transceivers, such as a UWB transceiver 309 and/or a BT transceiver 311. The WPAN transceivers may be configured to communicate locally on a WPAN, according to a WPAN protocol. For example, the first device 302 may be configured to communicate with a peripheral device 304 (such as a BT or UWB speaker, a BT or UWB controller, etc.) via respective WPAN transceivers of the respective communication devices 306, and using a corresponding WPAN protocol. The communication device 306 may include a WLAN transceiver, such as a WI-FI transceiver 313. The WLAN transceiver may be configured to communicate locally on a WLAN, according to a WLAN protocol. Continuing the above example, the first device 302 may be configured to communicate with the access point 105, via respective WLAN transceivers of the respective communication devices 306, to receive data (such as audio or music) streamed from a remote source. In various embodiments, the first device 302 may be configured to communicate such data received from the access point, via the WPAN, to the peripheral devices 304 for rendering.

The first device 302 and peripheral device(s) 304 may include one or more processing engine(s) 310. The processing engine(s) 310 may be or include any device, component, element, or hardware designed or configured to perform one or more functions described herein. The processing engine(s) 310 may be similar to the processing engine(s) 310 described above. While shown as being included on the first device 302 (and peripheral devices 304), it is noted that, in some embodiments, the processing engine(s) 310 may be hardware of the communication device 306 of the first device 302 and/or hardware of the transceiver(s) of the communication device 306.

In some embodiments, the processing engine(s) 310 may include one or more processor(s) and memory, where the memory stores or maintains instructions executed by the processor(s) to perform the corresponding function(s) of the processing engine 310. The processor(s) of the processing engine(s) 310 may be similar to the processors 118, 170 or processing unit(s) 616 describe above, and the memory may be similar to the storage 618 described above. The processing engine(s) 310 may include a channel selection engine 314 and a channel indication engine 316, described in greater detail below. While these processing engine(s) 310 are shown and described, it is noted that, in various embodiments, additional or alternative processing engine(s) 310 may be deployed or supported by the respective device. Further, and in various embodiments, two or more of the processing engine(s) 310 may be combined into a single processing engine 310, and/or a processing engine 310 may be divided into multiple processing engine(s) 310.

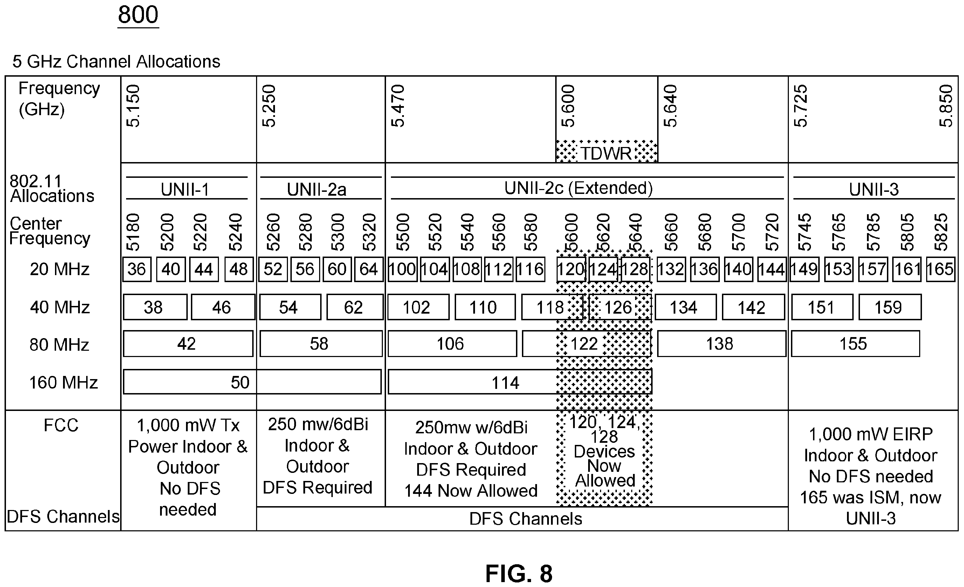

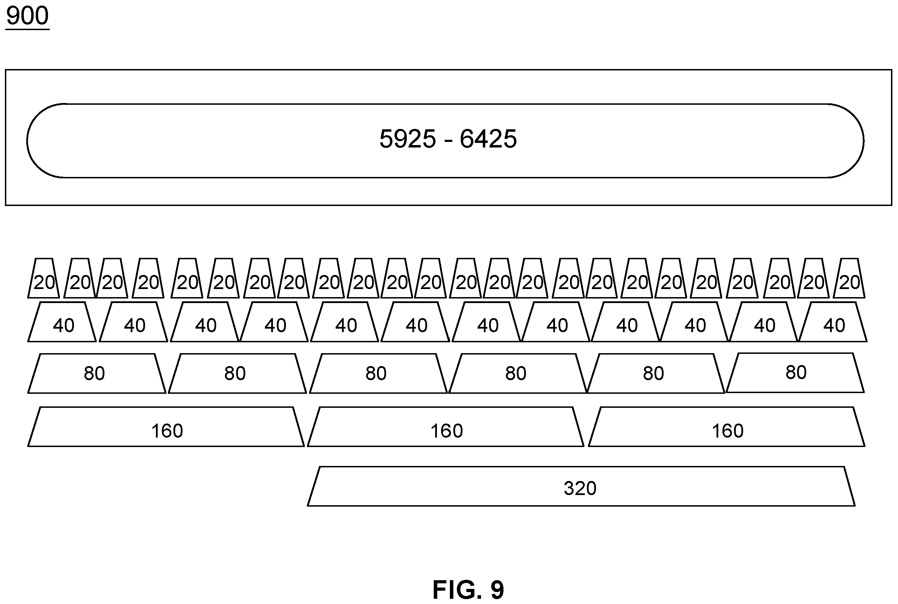

Referring briefly to FIG. 8 and FIG. 9, depicted are channel diagrams 800, 900 showing channels allocated for a frequency range between 5,150 MHz and 6,425 MHz, according to an example implementation of the present disclosure. In various embodiments, the WLAN protocol may involve or include a certain channel bandwidth for communication. Such channel bandwidth for the WLAN protocol may be, for example, 40 MHz and/or 80 MHz (contiguous). Assuming a WLAN device or transceiver (such as the WI-FI transceiver 313) is operating with an 80 MHz channel bandwidth, referring specifically to FIG. 8, the WLAN transceiver may be configured to establish connections on WLAN channel 42 (e.g., between 5,170 MHz and 5,250 MHz), WLAN channel 58 (e.g., between 5,250 MHz and 5,330 MHz), WLAN channel 106 (e.g., between 5,500 MHz and 5,580 MHz), WLAN channel 122 (e.g., between 5,580 MHz and 5,660 MHz), WLAN channel 138 (e.g., between 5,660 MHz and 5,740 MHz), and/or WLAN channel 155 (e.g., between 5,745 MHz and 5,825 MHz). Similarly, the WLAN transceiver may be configured to establish connections on WLAN channels in UNII-4 (e.g., between 5,850 MHz and 5,925 MHz). Continuing this example but for higher frequencies ranging between 5,925 MHz and 6,425 MHz, referring specifically to FIG. 9, the WLAN transceiver may be configured to establish connections on any of the 80 MHz WLAN channels shown in FIG. 9.

Similar to the WLAN protocol, various WPAN protocols may involve or include a certain channel bandwidth for communication. Such channel bandwidth for the WPAN protocol may be, for example, 2 MHz and/or 2.5 MHz. For example, a WPAN protocol for BT communication may include a 2 MHz channel bandwidth, and a WPAN protocol for UWB communication may include a 2.5 MHz channel bandwidth. However, the WPAN protocol may include establishing or maintaining a plurality of channels, such as five (or more) channels. As such, in operation, a WPAN device or transceiver may be configured to use five (or more) channels for communication, which may result in using a total of 20 MHz bandwidth. Continuing the above example, assuming a 2 MHz channel bandwidth for BT communication, a BT device or transceiver 311 may be configured to use ten 2 MHz channels (totaling 20 MHz total bandwidth). Similarly, assuming a 2.5 MHz channel bandwidth for UWB communication, a UWB device or transceiver 309 may be configured to use eight 2.5 MHz channels (again, totaling 20 MHz total bandwidth). Some WPAN protocols may support frequency hopping between different frequency channels. As such, according to various embodiments, the WPAN device or transceiver may be configured to use multiple channels, but such channels may not be needed to be contiguous.

Some WPAN devices or transceivers may support communication on higher frequencies, such as those frequencies which overlap or include frequency channels used by WLAN devices or transceivers. For example, in various embodiments, WLAN devices or transceivers may be configured to operate with a 80 MHz channel bandwidth (or 40 MHz channel bandwidth), on a frequency channel within a frequency range, which may be between 5,150 MHz and 6,425 MHz. In various embodiments, some WPAN devices or transceivers may support communication on one or more channels within the same frequency range as that used by such WLAN devices or transceivers. Where such transceivers are co-operating in the same frequency range, interference between the communication protocols can occur.

Referring back to FIG. 7, the first device 302 may include a channel selection engine 314. The channel selection engine 314 may be or include any device, component, element, or hardware designed or configured to identify, determine, or otherwise select a channel on which to establish a connection. In some embodiments, the channel selection engine 314 may be configured to select one or more channels in which to establish a connection between a WPAN device of the first device 302 and a corresponding WPAN device of a peripheral device 304. In some embodiments, the channel selection engine 314 may be configured to select the channel(s) within a frequency range which includes channel(s) reserved for WLAN devices. For example, the channel selection engine 314 may be configured to select the channel(s) within a frequency range between 5,150 MHz and 6,425 MHz, which includes various 80 MHz channels that are reserved for WLAN communications.

In some embodiments, the channel selection engine 314 may be configured to select the one or more channels within the frequency range including channels reserved for WLAN communications. The frequency range may be, for example, between 5,150 MHz and 5,250 MHz (or UNII-1), between 5,725 MHz and 5,850 MHz (or UNII-3), between 5,850 MHz and 5,925 MHz (or UNII-4), and/or between 5,925 MHz and 6,425 MHz (or UNII-5). The channel selection engine 314 may be configured to select the channels on which to establish the connection, such that a total bandwidth of the connection includes 20 MHz. For example, assuming the frequency range is between 5,925 MHz and 6,425 MHz, the channel selection engine 314 may be configured to select channels between 5,925 MHz and 5,945 MHz, on which to establish the connection.

In some embodiments, the channel selection engine 314 may be configured to select the one or more channels, according to one or more channel selection rules. For example, within the frequency range, certain 20 MHz channels may have a lesser likelihood of interfering with channels typically occupied by WLAN devices in the environment. Continuing this example, assuming that a WLAN access point 105 operates in the UNII-1 frequency band (e.g., 5,150 - 5,250 MHz), with a 80 MHz channel bandwidth, the WLAN access point 105 may occupy channel 42 (or 5,170 - 5,250 MHz). As such, the channel selection engine 314 may be configured to select one or more channels according to one or more channel selection rules indicating that, if channels are to be selected in UNII-1, such channels should be selected within the 20 MHz channel which will likely not be occupied by the WLAN access point 105 (e.g., between 5,150 - 5,170 MHz). While this example is provided for UNII-1, it is noted that similar rules may be applied for UNII-3, UNII-4, and/or UNII-5 (though because these frequency bands have more 80 MHz channels, additional 20 MHz frequency bands may be available for WPAN connections). For example, with respect to UNII-4 (which may not typically be used for WLAN connections), the channel selection engine 314 may be configured to select channels which have center frequencies at, e.g., 5,845 MHz (which occupies both frequencies in UNII-3 and UNII-4), 5,865 MHz, and/or 5,885 MHz. It is noted that, for higher frequencies of UNII-4, such as the upper 30 MHz spectrum (or between 5,895 MHz and 5,925 MHz), such frequencies may be reserved for other purposes (such as intelligent transport systems (ITS) operations), and thus a channel selection rule may indicate to avoid selection of corresponding channels in that frequency range. Further, the channel selection rule(s) for a particular frequency band may accommodate for future iterations of, e.g., WLAN usage of wider frequency bands (or other wireless technologies which use wider frequency bands of 160 MHz or 320 MHz). For example, a 320 MHz frequency band for UNII-5 may start at 6,105 MHz, and therefore the channel selection rules may indicate to prioritize selection of 20 MHz channels in UNII-5 which are below 6,105 MHz.

In some embodiments, the channel selection engine 314 may be configured to select various channels within gaps of channels of the frequency bands identified above. For example, within UNII-3, the channel selection engine 314 may be configured to select a 20 MHz channel with a center frequency at 5,745 MHz. In this channel, because a 10 MHz gap is present between 5,725 MHz and 5,735 MHz, the selected channel may have an effective bandwidth of 30 MHz (e.g., the 20 MHz channel with the center frequency at 5,745 MHz, in addition to the 10 MHz gap).

In some embodiments, the channel selection engine 314 may be configured to select one or more channels which has a combined bandwidth of 25 MHz. For example, the channel selection engine 314 may be configured to select channels within the frequency range of between 5,835 MHz and 5,850 MHz (or 15 MHz bandwidth) and the 10 MHz gap between 5,725 MHz and 5,735 MHz described above (e.g., totaling 25 MHz bandwidth). In this example, the channel selection engine 314 may be configured to select these channels, to provide, e.g., 10 - 12 WPAN channels for use by the respective transceivers. For instance, the UWB transceiver 309 may be configured to use ten 2.5 MHz channels which spans the 25 MHz bandwidth. Similarly, the BT transceiver 311 may be configured to use 12 2MHz channels which spans the 24 MHz bandwidth.

The first device 302 may include a channel indication engine 316. The channel indication engine 316 may be or include any device, component, element, or hardware designed or configured to identify, provide, or otherwise indicate the channel(s) selected by the channel selection engine 314. The channel indication engine 316 may be configured to receive or otherwise identify the channel(s) which are selected by the channel selection engine 314, and can generate an indication according to the identified channel(s). In some embodiments, the channel indication engine 316 may be configured to generate a packet which identifies or otherwise indicates the channel(s) selected by the channel selection engine 314. For example, the packet may include a bitmap, where each bit corresponds to a respective channel within the frequency range where the channel(s) are selected. For instance, where the frequency range is in UNII-1, the packet may include a bitmap, where each bit represents a 20 MHz channel (e.g., five bits to represent five 20 MHz channels between 5,150 MHz and 5,250 MHz). In some embodiments, the bitmap may include a bit which corresponds to a respective channel within UNII-1, UNII-3, UNII-4, and UNII-5. In other words, the bitmap may include the combination of bits which represent respective 20 MHz channel(s) between 5,150 MHz and 6,425 MHz, where the bitmap accommodates for various blocked off 20 MHz channels within the frequency range. For example, assuming that 38 bits (accommodating for each of the number of channels available for selection between UNII-1, and UNII-3 through UNII-5) are used for the bitmap, the bitmap can encode or otherwise identify each of the selected channels which are to be used within UNII-1, UNII-3, UNII-4, and/or UNII-5 for the connection between the devices. In some embodiments, the bitmap may include further bits which can provide for flexibility for future iterations (such as 64 bits for channels in higher frequency bands, like UNII-6 and/or UNII-8).

In some embodiments, the bitmap may include a first bitmask including a number of bits corresponding to frequency bands, and one or more second bitmasks including a number of bits corresponding to channels available for selection within the frequency band. For instance, the first bitmap may include four bits which correspond to UNII-1, UNII-3, UNII-4, and UNII-5, respectively. For each respective frequency band, a corresponding second bitmask may identify corresponding channels which are available for selection in the frequency band (e.g., five bits representative of the five channels in UNII-1, five bits representative of the five channels in UNII-3, three bits representative of the three channels in UNII-4, and 25 bits representative of the 25 channels in UNII-5). As one example, assuming a selection of the first channel (or 5,150 MHz - 5,170 MHz channel) is made in UNII-1, the bitmap may include the first bitmask (e.g., including [1 0 0 0]) identifying selection of the UNII-1 frequency band, and a corresponding second bitmask (e.g., [1 0 0 0 0]) identifying the first channel of the UNII-1 frequency band. Further, where multiple channels are selected in different frequency bands (e.g., UNII-1 and UNII-3), the bitmap may include the first bitmask (e.g., [1 1 0 0]) which identifies the selected frequency bands, and each of the second bitmasks corresponding to the selected frequency bands (e.g., [X X X X X] for UNII-1 and [X X X X X] for UNII-3). While these example bitmaps are provided, it is noted that such implementations could be expanded to cover further iterations in higher frequency bands (such as UNII-6 and UNII-8), with corresponding first and second bitmask modifications / additions.

The channel indication engine 316 may be configured to generate the packet to include the bitmap identifying which 20 MHz channels the channel selection engine 314 selected for establishing the connection(s) between the WPAN transceivers. The channel indication engine 316 may be configured to communicate, send, transmit, or otherwise provide the packet to one or more neighboring devices, such as the peripheral device(s) 304 and/or the access point 105. In some embodiments, the channel indication engine 316 may be configured to generate the packet as a traffic indication packet (TIP), where the TIP includes the bitmap. The TIP may be a packet used by WLAN devices to identify a presence of traffic for device(s) on the WLAN. As such, the channel indication engine 316 may be configured to generate the packet for transmission to the access point 105 and/or the peripheral device(s) 304. In some embodiments, the channel indication engine 316 may be configured to generate the packet as a beacon packet, where the beacon includes the bitmap. The beacon packet may be a packet periodically broadcasted to provide information relating to a network, such as a WLAN. As such, the channel indication engine 316 may be configured to generate the packet for transmission to the access point 105 and/or the peripheral device(s) 304.

The peripheral device(s) 304 and/or first device 302, upon selecting the channel(s) and establishing corresponding connections, may be configured to hop or switch between channels indicated in the packet. For example, the first device 302 and peripheral device(s) 304 may be configured to perform an adaptive frequency hopping procedure, to switch or hop between the channel(s) of the connection established between the first device 302 and peripheral device(s) 304. In this regard, by performing an adaptive frequency hopping procedure, the channels which are used by the respective devices 302, 304 may not necessarily be contiguous, while still accommodating for the channel bandwidth used to support such connections.

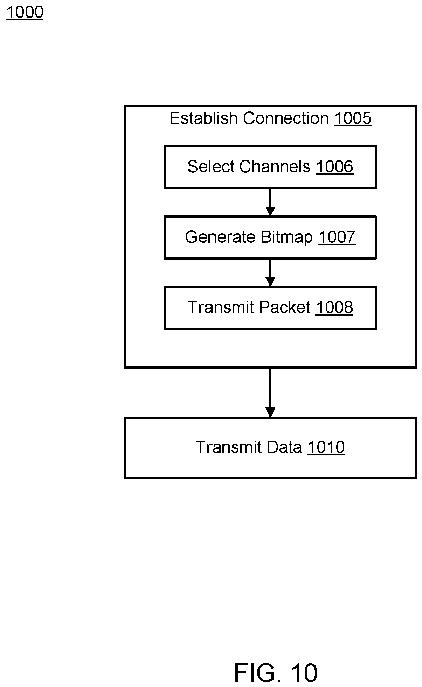

Referring now to FIG. 10, depicted is a flowchart showing an example method 1000 of frequency sharing, according to an example implementation of the present disclosure. The method 1000 may be performed by the devices, components, elements, or hardware described above with reference to FIG. 1 - FIG. 9. As a brief overview, at step 1005, a first device may establish a connection with a second device. At step 1010, the first device may transmit data to the second device.

At step 1005, a first device may establish a connection with a second device. In some embodiments, the first device may be a WPAN device, such as a UWB transceiver or 2.4 GHz (or BLUETOOTH) transceiver. Similarly, the second device may also be a WPAN device. In this regard, the connection established at step 1005 may be a WPAN connection. The connection may include a plurality of WPAN channels which are established in a frequency range which includes one or more channels reserved/allocated/configured for WLAN communication. The frequency range may be or include UNII-1, UNII-3, and/or UNII-5 described above with reference to FIG. 8 and FIG. 9. The WPAN channels may include, for example, five (or more) channels used for various purposes. For instance, the WPAN channels may include three advertising channels and/or two data channels.

The first device may establish the connection with the second device, responsive to the first and second device being turned on, activated, and/or within a wireless communication range of one another. In some embodiments, the first device may establish the connection with the second device, responsive to a user of the first and second device requesting to establish the connection. For example, a user may launch an application (e.g., on one of the device(s)) which includes or involves communication between the first and second device. As another example, a user may initiate a procedure for establishing the connection by the first device, as part of usage of the second device (such as removal of the second device from a case, selecting a button or otherwise providing a user input to the second device, etc.).

Step 1005 may include one or more sub-steps 1006 - 1008 (referred to generally as "steps"). While shown as sub-steps of step 1005, it is noted that, in various embodiments, such sub-steps 1006 could be separate or independent from step 1005.

At step 1006, the first device may determine, identify, or otherwise select one or more channels in which to establish the connection. In some embodiments, the first device may select one or more channels in which to establish the WPAN connection between the respective WPAN devices. The first device may select the channels from the frequency range, which itself may include channel(s) reserved/allocated/used for WLAN communication. The first device may select the channels according to one or more channel selection rules. The first device may include, maintain, or otherwise access the channel selection rule(s) used for selecting the channels in which to establish the connection. The channel selection rule(s) may include or identify preferred channel(s), channel(s) to preferably avoid, etc. The first device may select one or more 20 MHz channels, which are to be used for maintaining the connection between the first device and the second device. The first device may select the 20 MHz channel(s) according to the channel selection rule(s). In some embodiments, the first device may select a plurality of 20 MHz channels, which may be in different frequency bands within the frequency range. For example, the first device may select one 20 MHz channel from UNII-1, another 20 MHz channel from UNII-3, and/or another 20 MHz channel from UNII-5. As described in greater detail below, the first device and second device may use the selected channels to provide a total of 20 MHz in bandwidth for the combination of channel(s) for the WPAN connection.

At step 1007, the first device may determine, produce, or otherwise generate a bitmap. The first device may generate/configure the bitmap according to the channel(s) selected at step 1006. The bitmap may include a plurality of bits which identify the selected channel(s). For example, the bitmap may include a plurality of bits, where each bit corresponds to, identifies, or otherwise represents a respective channel within the frequency range in which the channel(s) are selected. For instance, where the frequency range is between 5,150 MHz and 6,425 MHz, the bitmap may include bits representing/indicating/identifying respective individual channels within the frequency range. In some embodiments, the bits may represent individual 20 MHz channels. In this regard, the bitmap may include bits representing 20 MHz channels within the frequency range. In instances in which the frequency range is between 5,150 MHz and 6,425 MHz, the bitmap may include bits which represent or otherwise identify each of the 20 MHz channels within that frequency range which are available for selection. The first device may generate the bitmap by configuring the bits of the bitmap to identify the channel(s) which were selected (e.g., at step 1006).

At step 1008, the first device may communicate, send, provide, or otherwise transmit a packet. In some embodiments, the first device may transmit a packet which includes the bitmap (e.g., generated at step 1007). The first device may transmit the packet for receipt by the second device and/or a WLAN device (such as the access point). The packet may be or include a traffic indication packet (TIP) and/or a beacon packet. The device(s), upon receiving the packet, may determine which channel(s) were selected for the WPAN connection. For example, where the second device receives the packet, the second device may perform adaptive frequency hopping between the channel(s), as part of maintaining the connection. Additionally, where the access point receives the packet, the access point may determine which channel(s) to use for WLAN connections in the environment (e.g., based on which channel(s) are currently being used for the WPAN connection).

In some embodiments, as part of establishing (and subsequently, maintaining) the connection, the first device and/or second devices may switch between channels selected at step 1006. For example, the first device and second device may perform an adaptive frequency hopping procedure, to switch or hop between the WPAN channels of the connection. In this regard, rather than having a 20 MHz contiguous channel which is occupied by the WPAN connection, the first device and second device can switch between different channels of different channel bandwidths, to provide a total of 20 MHz in channel bandwidth.

In some embodiments, the first device may also establish a second connection. For example, the first device may establish the WPAN connection as described above (e.g., between the first device and second device), and may also establish a second connection with the WLAN access point. The first device may establish the second connection within the same frequency range in which the first connection was established. The first device may establish the second connection, to receive data / information / content from a remote source via the WLAN access point, a portion of which, in some instances, may be sent by the first device to the second device. For example, and in some embodiments, the first device may receive first data from the WLAN access point (e.g., via the second connection), and send corresponding second data to the second device via the first connection. In this example, the first data may be or include content relating to, for instance, content from a remote source and sent to the first device via the WLAN access point, and the second data may be or include related content which is sent to the second device for rendering. Continuing this example, the first data may be music from the remote source (e.g., a streaming service) sent to the first device, and the first device may render the music to a user via the second device.

At step 1010, the first device may transmit data to the second device. The first device may transmit data via one or more of the channel(s) of the connection established at step 1005 (e.g., and selected at step 1006) to the second device. In some embodiments, the first device may transmit the data to the second device, upon the data being generated at the first device. For example, the first device may generate (e.g., via an application or resource of the first device) the data for transmission to the second device, and the first device may transmit the data to the second device via a data channel of the connection. In some embodiments, the first device may transmit the data to the second device, upon the data being received by the first device from the WLAN access point. For example, a remote source (as described above) may transmit data to the first device via the WLAN access point. The WLAN access point may send the data received from the remote source to the first device, e.g., via the WLAN connection. The first device, upon receiving the data from the WLAN access point, may transmit the data to the second device.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure, as defined by the appended claims.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

## Claims

1. A method, comprising:
establishing, by a first wireless personal area network (WPAN) device, a connection with a second WPAN device, the connection comprising a plurality of WPAN channels established in a frequency range which includes one or more channels allocated for wireless local area network (WLAN) communication; and
transmitting, by the first WPAN device, data via one or more of the plurality of WPAN channels, to the second WPAN device.

2. The method of claim 1, wherein the first WPAN device and the second WPAN device comprise at least one of ultra-wideband (UWB) devices, or a device operating at 2.4 gigahertz (GHz).

3. The method of claims 1 or 2, wherein a first device comprises the first WPAN device and a WLAN device, the connection comprises a first connection, and wherein the method further comprises:
establishing, by the WLAN device, a second connection with a WLAN access point within the frequency range of the first connection.

4. The method of any preceding claim, further comprising:
performing, by the first WPAN device, an adaptive frequency hopping procedure, to hop between the plurality of WPAN channels of the connection.

5. The method of any preceding claim, wherein the connection includes a combined bandwidth of at least 20 megahertz (MHz) across the plurality of WPAN channels; and/or
wherein the plurality of WPAN channels comprise at least five channels, including three advertising channels and two data channels.

6. The method of any preceding claim, wherein the frequency range comprises at least one of following frequency ranges:
between 5,150 megahertz (MHz) and 5,250 MHz,
between 5,725 MHz and 5,850 MHz,
between 5,850 MHz and 5,925 MHz, or
between 5,925 MHz and 6,425 MHz.

7. The method of claim 6, wherein the frequency range comprises a frequency range between 5,925 MHz and 6,425 MHz, and wherein the plurality of WPAN channels comprises channels between 5,925 MHz and 5,945 MHz.

8. The method of any preceding claim, further comprising:
generating, by the first WPAN device, a packet to indicate the plurality of WPAN channels of the connection to be established; and
transmitting, by the first WPAN device, the packet for receipt by at least one of the second WPAN device or a WLAN device; and
optionally, wherein the packet comprises at least one of a traffic indication packet or a beacon packet, and/or wherein the packet comprises a bitmap, where each bit of the bitmap corresponds to a respective channel between 5,150 megahertz (MHz) and 6,425 MHz.

9. A first device, comprising:
a wireless personal area network (WPAN) transceiver; and
one or more processors configured to:
establish, via the WPAN transceiver, a connection with a second device, the connection comprising a plurality of WPAN channels established in a frequency range which includes one or more channels allocated for wireless local area network (WLAN) communication; and
transmit, via the first WPAN transceiver, data via one or more of the plurality of WPAN channels, to the second device.

10. The first device of claim 9, wherein the first WPAN device and the second WPAN device comprise at least one of ultra-wideband (UWB) devices, or a device operating at 2.4 gigahertz (GHz).

11. The first device of claims 9 or 10, further comprising a WLAN transceiver,
wherein the connection comprises a first connection, and wherein the one or more processors are configured to:
establish, via the WLAN transceiver, a second connection with a WLAN access point within the frequency range of the first connection.

12. The first device of any of claims 9 to 11, wherein the connection includes a combined bandwidth of at least 20 megahertz (MHz) across the plurality of WPAN channels; and/or,
wherein the plurality of WPAN channels comprise at least five channels, including three advertising channels and two data channels.

13. The first device of any of claims 9 to 12, wherein the frequency range comprises at least one the following frequency ranges:
between 5,150 megahertz (MHz) and 5,250 MHz,
between 5,725 MHz and 5,850 MHz,
between 5,850 MHz and 5,925 MHz, or
between 5,925 MHz and 6,425 MHz.

14. The first device of claim 13, wherein the frequency range comprises a frequency range between 5,925 MHz and 6,425 MHz, and wherein the plurality of WPAN channels comprises channels between 5,925 MHz and 5,945 MHz.

15. The first device of any of claims 9 to 14 , wherein the one or more processors are configured to:
generate a packet to indicate the plurality of WPAN channels of the connection to be established; and
transmit, via the WPAN transceiver, the packet for receipt by at least one of the second WPAN device or a WLAN device; and
optionally, wherein the packet comprises at least one of a traffic indication packet or a beacon packet for a WLAN device, and wherein
the packet comprises a bitmap, where each bit of the bitmap corresponds to a respective channel between 5,150 megahertz (MHz) and 6,425 MHz.
